# EUROPÄISCHE PATENTSCHRIFT

(11) **EP 1 356 985 B1**
(45) Veröffentlichungstag und Bekanntmachung des Hinweises auf die Patenterteilung: **13.04.2005**
(21) Anmeldenummer: 03009382.7
(22) Anmeldetag: 25.04.2003
(51) Int. Cl.: B60N 2/02, H01H 25/00

(54) **Dreh-Schiebeschalter**
Slide and rotary switch
Connecteur rotatif et linéaire

(30) Priorität: 25.04.2002 DE 10218438
(43) Veröffentlichungstag der Anmeldung: 29.10.2003
(73) Patentinhaber: Delphi Technologies, Inc., Troy, Michigan 48007 (US)
(72) Erfinder: Schneiss, Rüdiger, 55629 Seesbach (DE)
(74) Vertreter: Becker, Bernd, Dipl.-Ing.

(56) Entgegenhaltungen:
- EP-A- 1 126 482
- DE-A- 3 524 439
- PATENT ABSTRACTS OF JAPAN vol. 1997, no. 05, 30. Mai 1997 (1997-05-30) -& JP 09 022642 A (YAZAKI CORP), 21. Januar 1997 (1997-01-21)

## Beschreibung

Die Erfindung bezieht sich auf einen Dreh-Schiebeschalter, insbesondere für ein Kraftfahrzeug, mit einem drehbaren und auf senkrecht zueinander ausgerichteten Translationsachsen kreuzweise verschiebbaren Betätigungselement, das mit mindestens einem Schaltkontakte tragenden Schiebeschaltglied zur Beaufschlagung von Anschlusskontakten zusammenwirkt.

Ein solcher Dreh-Schiebeschalter wird oftmals als Spiegelverstellschalter oder Sitzverstellschalter in einem Kraftfahrzeug eingesetzt, wobei ein Betätigungselement in der Regel auf senkrecht zueinander ausgerichteten Translationsachsen aus seiner Ausgangslage bidirektional verschiebbar sowie verdrehbar ist, um unterschiedliche Schaltfunktionen in einem Schalter zu realisieren. Nach dem Loslassen des Betätigungselementes kehrt dieses in seine Ausgangslage, Null-Lage, zurück.

Aus der Praxis ist ein Dreh-Schiebeschalter mit einem in einem Gehäuse kreuzweise verschiebbar sowie verdrehbar gelagerten Betätigungselement bekannt, wie er in der gattungsbildenden DE-A-3524439 beschrieben ist. Das Betätigungselement wirkt mit drei Schiebeschaltgliedern zusammen, die jeweils zwei federbelastete Kontaktrollen zur Beaufschlagung von Kontaktbahnen aufweisen, wobei die Kontaktbahnen als Stanzgitter ausgebildet sind. Das Stanzgitter ist in einen Sockel eingespritzt und weist Anschlusskontakte auf. Die im Wesentlichen rechteckförmigen Schiebeschaltglieder sind mit ihren Längsseiten parallel zueinander im Gehäuse ausgerichtet und weisen Ansätze auf, die in das Betätigungselement eingreifen. Hierbei ist das mittlere Schiebeschaltglied auf zwei gehäuseseitigen Stegen in einer ersten Verschieberichtung hin und her verschiebbar geführt. Bei einer Drehbewegung des Betätigungselementes wird das mittlere Schiebeschaltglied nicht beaufschlagt. Die beiden äußeren Schiebeschaltglieder sind ebenfalls durch gehäuseseitige Stege geführt, die senkrecht zu den Stegen für das mittlere Schiebeschaltglied ausgerichtet sind und in einer zweiten, senkrecht zur ersten Verschieberichtung orientierten Verschieberichtung des Betätigungselementes verschiebbar. Beim Verdrehen des Betätigungselementes werden die beiden äußeren Schiebeschaltglieder gegenläufig zueinander verschoben. Dieser Dreh-Schiebeschalter weist einen relativ komplizierten Aufbau auf.

Es ist Aufgabe der Erfindung, einen Dreh-Schiebeschalter der eingangs genannten Art zu schaffen, der bei einer gewährleisteten Funktionssicherheit einen relativ einfachen Aufbau aufweist.

Erfindungsgemäß wird die Aufgabe dadurch gelöst, das Schiebeschaltglied zwei relativ zueinander verschiebbare, jeweils einer der Translationsachsen zugeordnete Schaltglieder aufweist.

Aufgrund der Zweiteilung des Schiebeschaltgliedes und der Zuordnung jeweils eines der Schaltglieder zu einer der Translationsachsen können die von den Schaltgliedern beaufschlagten Anschlusskontakte bei einer hohen Schaltsicherheit relativ dicht nebeneinander angeordnet werden, ohne dass die Gefahr einer Fehlkontaktierung der Anschlusskontakte durch die Schaltkontakte der Schaltglieder besteht. Eine Fehlkontaktierung muss insbesondere dann ausgeschlossen werden, wenn der Dreh-Schiebeschalter beispielsweise als Lastschalter ausgeführt ist und ein relativ hoher Nennstrom anliegt, da eine Fehlkontaktierung in diesem Fall zu einer schwerwiegenden Beeinträchtigung des Bordnetzes eines Kraftfahrzeuges führt.

Bevorzugt sind die beiden Schaltglieder des Schiebeschaltgliedes derart zueinander angeordnet, dass bei einer Verschiebung eines der Schaltglieder eine Beaufschlagung des jeweils anderen Schaltgliedes verhindert ist. Vorzugsweise lagern die beiden Schaltglieder das Betätigungselement derart, dass bei einer Verschiebung eines der Schaltglieder eine Verdrehung des Betätigungselementes verhindert ist. Damit ist ein hoher Stromfluss innerhalb des Dreh-Schiebeschalters durch die gleichzeitige Betätigung mehrerer Schaltglieder ausgeschlossen.

Um eine relativ geringe Bauhöhe des Dreh-Schiebeschalters zu erzielen, weist zweckmäßigerweise das erste der ersten Translationsachse zugeordnete Schaltglied eine in Richtung eines mit den Anschlusskontakten versehenen Sockels weisende Freimachung zum Übergreifen des zweiten der zweiten Translationsachse zugeordneten Schaltgliedes auf.

Zur Bereitstellung einer fertigungstechnisch relativ einfach zu realisierenden Geometrie, die darüber hinaus mit einem geringen Aufwand zu lagern ist, ist bevorzugt eine Grundfläche jedes der beiden Schaltglieder im Wesentlichen rechteckförmig ausgebildet.

Nach einer vorteilhaften Ausgestaltung des Erfindungsgedankens sind das erste und das zweite Schaltglied jeweils mit einem senkrecht zu ihrer Längsachse sowie senkrecht zu der zugeordneten Translationsachse ausgerichteten Langloch versehen, durch die eine Verstellachse des Betätigungselementes geführt ist. Bei einer Beaufschlagung des Betätigungselementes entlang einer der Translationsachsen kommt die Verstellachse an einer entsprechenden Längswandung des zugeordneten Schaltgliedes zur Anlage und verschiebt dasselbe, während die Verstellachse in dem Langloch des anderen Schaltgliedes frei bewegbar ist. Somit kann jeweils nur eines der Schaltglieder verschoben werden. Die Langlöcher begrenzen auch eine Verschiebung der Schaltglieder und stellen somit deren Endlagen sicher.

In einer bevorzugten Weiterbildung der Erfindung weisen die beiden Langlöcher jeweils in ihrer Mitte eine bauchige Öffnung auf, wobei die in einer Ausgangsstellung des Betätigungselementes übereinander stehenden Öffnungen einen lichten Durchmesser aufweisen, der einem Eckmaß der im Querschnitt quadratisch ausgebildeten Verstellachse entspricht. Aufgrund der bauchigen Öffnung innerhalb der die Verstellachse mit dem quadratischen Querschnitt lagernden Langlöcher ist eine gleichzeitig Beaufschlagung eines der Schaltglieder und des Drehschaltgliedes verhindert. Befindet sich die Verstellachse außerhalb der in der Ausgangsstellung des Betätigungselementes übereinander stehenden Öffnungen, ist eine Verdrehung des Betätigungselementes und damit auch des Drehschaltgliedes ausgeschlossen, da die Ecken der Verstellachse an den gegenüberliegenden Längswandungen des Langlochs des beaufschlagten Schaltgliedes zur Anlage kommen.

Zur Gewährleistung einer kompakten Bauweise weist vorteilhafterweise das zweite Schaltglied eine in Richtung des Sockels weisende Aussparung für das Drehschaltglied auf.

Zweckmäßigerweise ist in das erste Schaltglied eine in Richtung des Betätigungselementes weisende Nut zur verschiebbaren Lagerung einer Platte entlang der zweiten Translationsachse des zweiten Schaltgliedes eingelassen, die mit einer Durchgangsbohrung zur verdrehbaren Aufnahme der Verstellachse versehen ist. Die Platte dient zur Lagerung der Verstellachse des Betätigungselementes.

Um eine zuverlässige Lagerung der Schaltglieder des Schiebeschaltgliedes zu gewährleisten, sind vorzugsweise das erste und das zweite Schaltglied zwischen kreuzförmig an dem Gehäuse angeformten Führungsstegen verschiebbar gelagert. Zweckmäßigerweise ist jeder der Führungsstege im Wesentlichen V-förmig ausgebildet, wobei eine Spitze jedes Führungssteges in einen zwischen den beiden Schaltgliedern gebildeten Eckbereich weist. Die Ausrichtung bzw. Anordnung und geometrische Gestaltung der Führungsstege verhindert eine gleichzeitige Verschiebung beider Schaltglieder, da eine diagonal zu den Translationsachsen gerichtete Bewegung des Betätigungselementes ausgeschlossen ist. Bei einer solchen Bewegungsrichtung tritt eine selbsthemmende Wirkung ein.

Zur Erzeugung eines Schaltgefühls für den Bediener des Dreh-Schiebeschalters ist bevorzugt jeder Schenkel des Führungssteges als Rastkurve ausgebildet, die von einer zugeordneten federbelasteten Rasthülse eines der Schaltglieder beaufschlagt ist. Darüber hinaus stellen die mit den federbelasteten Rasthülsen zusammenwirkenden Rastkurven eine Rückstellung der Schaltglieder nach einem Loslassen des Betätigungselementes sicher.

Zweckmäßigerweise trägt die Verstellachse an ihrem freien Ende das Drehschaltglied. Vorzugsweise ist das Drehschaltglied mit kreuzförmig zueinander ausgerichteten Armen mit endseitigen Kontaktelementen zu Beaufschlagung zugeordneter Anschlusskontakte versehen.

Um auch bei der Verdrehung des Betätigungselementes ein haptisch wahrnehmbares Schaltgefühl für den Bediener zu erzeugen und Endlagen zu definieren, ist vorteilhafterweise der Verstellachse eine zwischen dem Gehäuse und dem Betätigungselement angeordnete Rasteinrichtung für die Verdrehung des Betätigungselementes zugeordnet.

Nach einer alternativen Ausgestaltung der Erfindung sind das erste und das zweite Schaltglied in jeweils einer in den Sockel eingelassenen Nut geführt, die entsprechend den Translationsachsen ausgerichtet sind. Zweckmäßigerweise weisen das erste und das zweite Schaltglied jeweils endseitige Führungsansätze auf, mit denen sie in die zugeordneten Nuten eingreifen. Diese Art der Führung bewirkt eine relativ stabile und damit sichere Führung der Schaltglieder, womit eine hohe Funktionssicherheit des Dreh-Schiebe-Schalters einhergeht.

Zur Erzeugung eines für den Benutzer des Dreh-Schiebe-Schalters wahrnehmbaren Schaltgefühls sind vorzugsweise das erste und das zweite Schaltglied mit zylindrischen Aufnahmen für druckfederbelastete Rasthülsen versehen, die mit zugeordneten Rastbahnen des Gehäuses zusammenwirken. Die Rastbahnen können auf einer dem Sockel gegenüberliegenden Innenseite des Gehäuses ausgebildet sein und die Wirkrichtung der Rasthülsen parallel zur Verstellachse verlaufen, womit ein relativ geringer Platzbedarf zu erzielen ist.

Um die von einem Benutzer auf das Betätigungselement ausgeübten Beaufschlagungsbewegungen auf die Schaltglieder zu übertragen, ist nach einer Weiterbildung des Erfindungsgedankens dem ersten und dem zweiten Schaltglied eine gemeinsame Betätigerplatte oberhalb des ersten Schaltgliedes zur Beaufschlagung derselben zugeordnet.

Damit die Betätigungsplatte bei einer Verschiebung in die eine Richtung das zugeordnete Schaltglied verlagert, bei einer Verschiebung in die dazu senkrecht verlaufende Richtung das weitere Schaltglied aber nicht beaufschlagt, ist vorteilhafterweise die Betätigerplatte mit einem Langloch für die Verstellachse versehen, das zu dem Langloch des ersten Schaltgliedes korrespondiert.

Zur Realisierung einer einfach aufgebauten Führung sind zweckmäßigerweise in die Betätigerplatte kreisbogenförmige Durchbrüche eingelassen, in die zur Führung bei einer Verdrehung des Betätigungselementes auf dem ersten Schaltglied angeordnete Zapfen eingreifen.

Bevorzugt weist die Betätigerplatte Mitnehmer für das erste und das zweite Schaltglied auf, die an den Aufnahmen für die Rasthülsen angreifen. Als Mitnehmer kann eine geradlinige Außenkante, ein Langloch oder eine Einbuchtung vorgesehen sein, wobei jedem Schaltglied zumindest ein Mitnehmer zugeordnet ist.

In weiterer vorteilhafter Ausgestaltung der Erfindung weist die Betätigerplatte einen Ausleger auf, der zur Betätigung eines zweiten Schiebeschaltgliedes bei einer Verdrehung des Betätigungselementes dient, dessen Schaltkontakte zugeordnete Schaltkontaktbahnen beaufschlagen. Mittels des Auslegers wird eine Distanz zwischen den Schaltgliedern und dem zweiten Schiebeschaltglied überbrückt, die zur funktionsgerechten Anordnung dieser Schaltelemente erforderlich ist.

Bevorzugt umfasst das zweite Schiebeschaltglied einen im Querschnitt zylindrischen Ansatz, der zur translatorischen Verschiebung des zweiten Schiebeschaltgliedes in einem Langloch des Auslegers geführt ist, das korrespondierend zu dem Langloch des zweiten Schaltgliedes ausgerichtet ist. Alternativ ist das zweite Schiebeschaltglied mit einem Langloch versehen, in das ein am Ausleger der Betätigerplatte angeformter Zapfen zur translatorischen Verschiebung des zweiten Schiebeschaltgliedes eingreift. Da die Betätigungsplatte bei einer Beaufschlagung des Betätigungselementes zum Verschieben des ersten Schaltgliedes eine Drehbewegung ausführt, sind durch das Langloch in dem Ausleger oder in dem zweiten Schiebeschaltglied die erforderlichen Freiheitsgrade für ein kreuzweises Verschieben des Betätigungselementes ohne eine Betätigung des zweiten Schiebeschaltgliedes gegeben. Gleichzeitig ermöglicht das Langloch die Umsetzung der Rotationsbewegung des Betätigungselementes in eine Translationsbewegung des zweiten Schiebeschaltgliedes.

Damit der Benutzer des Dreh-Schiebe-Schalters auch bei einer rotatorischen Betätigung des Betätigungselementes eine taktil wahrnehmbare Rückmeldung bezüglich des Schaltvorganges erhält, sind bevorzugt dem zweiten Schiebeschaltglied druckfederbelastete Rasthülsen zugeordnet, die mit entsprechenden gehäuseseitigen Rastkurven zusammenwirken. Auch diese Rasthülsen wirken in eine zum Sockel entgegengesetzte Richtung und die zugeordneten Rastkurven sind auf der dem Sockel zugewandten Innenseite des Gehäuses ausgeformt.

Für eine stabile und einfach zu realisierende Lagerung des zweiten Schiebeschaltgliedes ist zweckmäßigerweise das zweite Schiebeschaltglied parallel zur Translationsachse des ersten Schaltgliedes verschiebbar in Nuten im Sockel geführt.

Zur Beaufschlagung der Anschlusskontakte sind das erste Schaltglied, das zweite Schaltglied und das zweite Schiebeschaltglied an ihren schmalen Endseiten mit jeweils einer in Richtung des Sockels weisenden Kontaktrolle versehen.

Zur Abdichtung des Gehäuseinneren des Dreh-Schiebeschalters gegen das Eindringen von Staub und/oder Spritzwasser durchragt zweckmäßigerweise die Verstellachse eine in dem Gehäuse angeordnete kreisringförmige Dichtmembrane mit einer umlaufenden Dehnfalte. Bevorzugt ist zwischen dem Gehäuse und dem Sockel eine umlaufende Dichtung angeordnet. Die Dehnfalte der Dichtmembrane ist derart dimensioniert, dass die kreuzweise Beaufschlagung des Betätigungselementes bei gleichzeitiger Abdichtung gegenüber der Verstellachse sichergestellt ist. Die Abdichtung ist insbesondere bei einer Verwendung des Dreh-Schiebeschalters als Sitzverstellschalter erforderlich, der in einer Seitenverkleidung eines Kraftfahrzeugsitzes installiert wird, da diese Seitenverkleidung oftmals nicht von einem Dach des Kraftfahrzeuges überspannt ist und Spritzwasser bzw. Regenwasser von dem Dach auf den Dreh-Schiebeschalter gelangen kann. Durch die Abdichtungen werden beispielsweise die Anforderungen nach DIN 40 050 T9, Schutzart IP5K4 erfüllt.

Zweckmäßigerweise nehmen das erste und das zweite Schaltglied, das Drehschaltglied sowie das zweite Schiebeschaltglied zugeordnete Schaltstellungen getastet ein.

Nach einer weiteren Ausgestaltung der Erfindung werden bei einer Beaufschlagung des ersten Schaltgliedes Stellmotoren für eine Hin- und Her-Bewegung eines Kraftfahrzeugsitzes, bei einer Betätigung des zweiten Schaltgliedes Stellmotoren für eine Auf- und Ab-Bewegung des Kraftfahrzeugsitzes und bei einer Verdrehung des Drehschaltgliedes oder einer Beaufschlagung des zweiten Schiebeschaltgliedes Stellmotoren für eine Neigungsverstellung einer Rückenlehne des Kraftfahrzeugsitzes angesteuert.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen. Der Rahmen der vorliegenden Erfindung ist nur durch die Ansprüche definiert.

Die Erfindung wird im Folgenden anhand von zwei Ausführungsbeispielen unter Bezugnahme auf die zugehörigen Zeichnungen näher erläutert. Es zeigen:

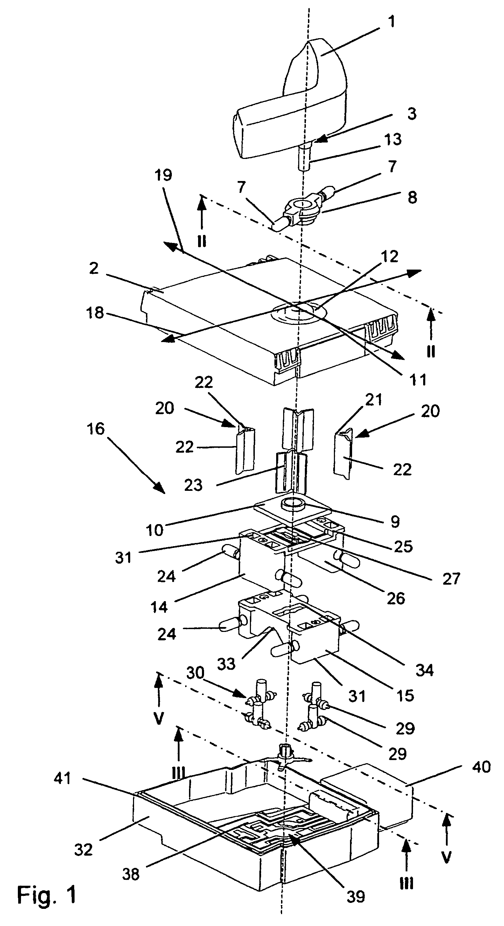

- Fig.1: eine Explosionsdarstellung des erfindungsgemäßen Dreh-Schiebeschalters,

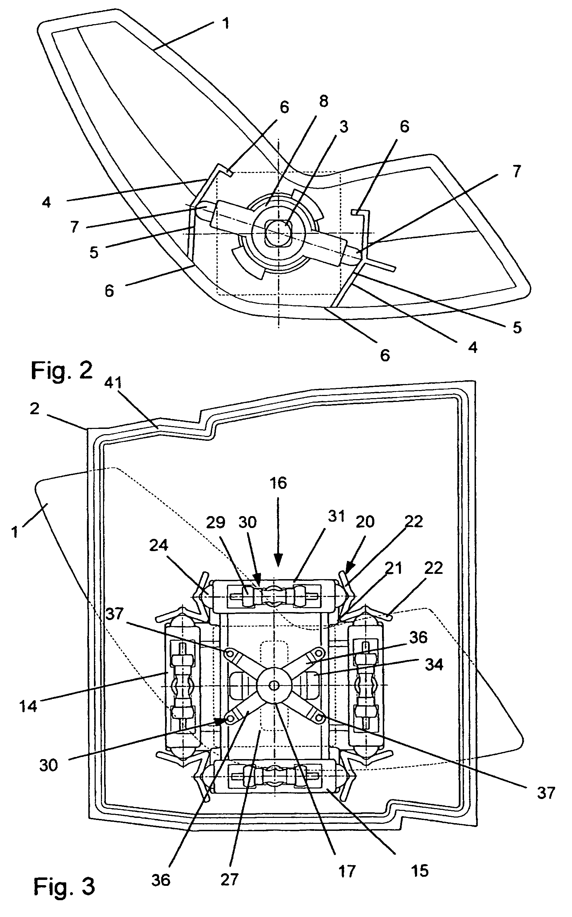

- Fig.2: eine Darstellung gemäß der Linie II-II nach Fig. 1,
- Fig.3: eine Darstellung gemäß der Linie III-III nach Fig. 1 in einer Ausgangsstellung eines Betätigungselementes des Dreh-Schiebeschalters,

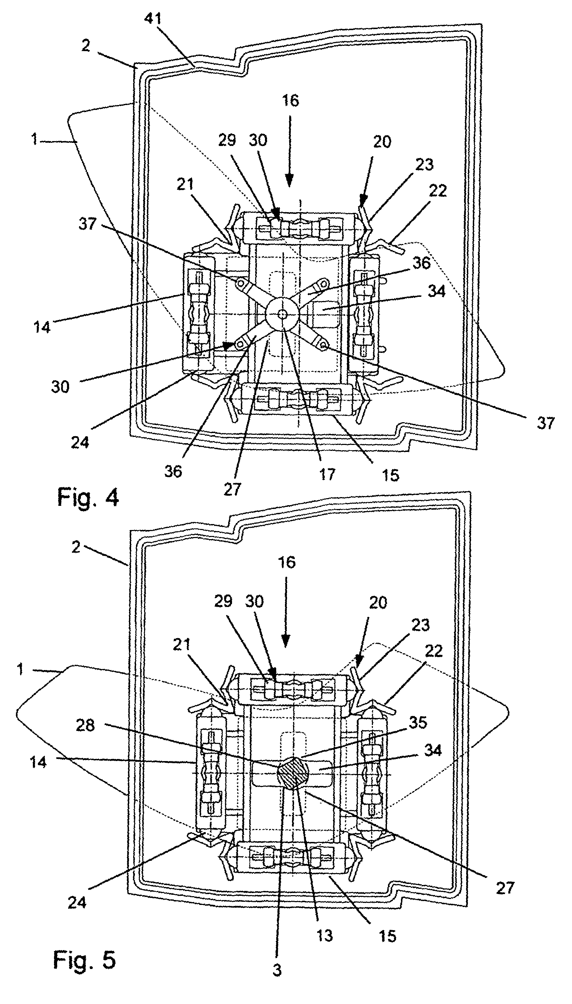

- Fig.4: eine Darstellung nach Fig. 2 in einer beaufschlagten Stellung des Betätigungselementes,
- Fig.5: eine Darstellung gemäß der Linie V-V nach Fig. 1 in einer Ausgangsstellung des Betätigungselementes,

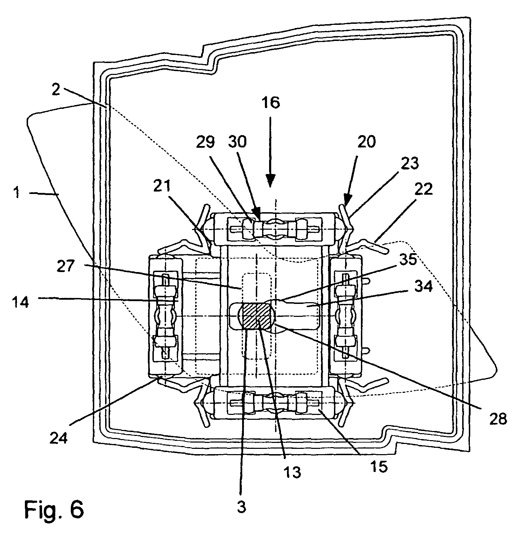

- Fig.6: eine Darstellung nach Fig. 5 in einer beaufschlagten Stellung des Betätigungselementes

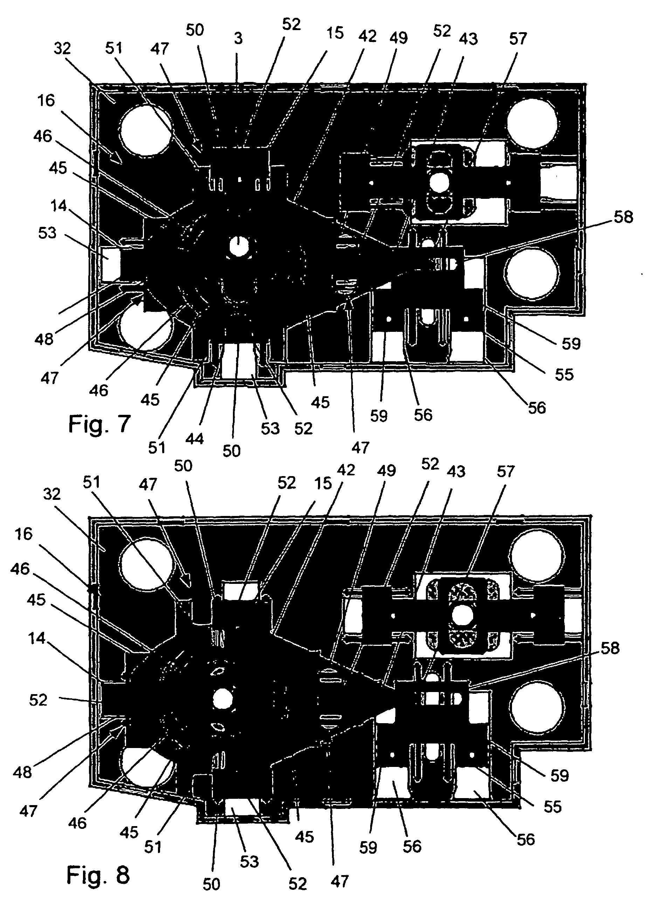

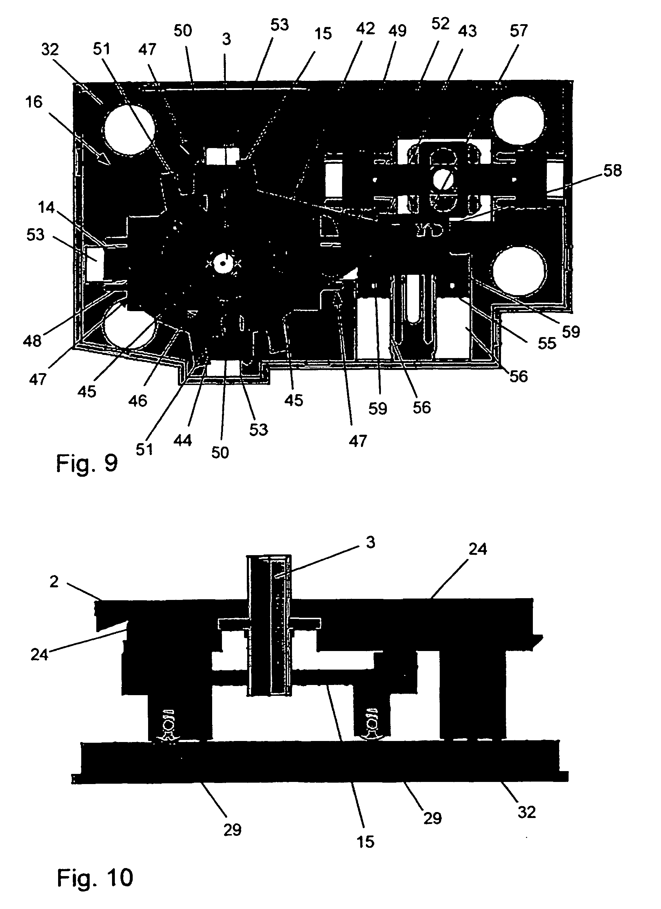

- Fig.7 bis Fig.9: Darstellungen unterschiedlicher Schaltstellungen des Dreh-Schiebeschalters gemäß Fig. 1 nach einer alternativen Ausgestaltung und
- Fig.10: eine Schnittdarstellung des Dreh-Schiebeschalters gemäß Fig. 7.

Der Dreh-Schiebeschalter für ein Kraftfahrzeug umfasst ein Betätigungselement 1, das in der abgewinkelten Form eines Kraftfahrzeugsitzes gestaltet ist und das an seiner in Richtung eines Gehäuses 2 weisenden Seite eine angeformte Verstellachse 3 trägt. Innerhalb des Betätigungselementes 1 sind zwei Wandungen 4 mit jeweils einer Rastkurve 5 für die Drehbewegungen des Betätigungselementes 1 ausgeformt. Die Rastkurven 5 enden in Endanschlägen 6 zur Begrenzung der Drehbewegung des Betätigungselementes 1. Mit den Rastkurven 5 wirken federbelastete Rasthülsen 7 zusammen, die in einem von der Verstellachse 3 durchragten Ring 8 gelagert sind, wobei der Ring 8 drehfest auf einem Ansatz 9 einer innerhalb des Gehäuses 2 angeordneten Platte 10 befestigt ist. Die Verstellachse 3 ist in eine kreisringförmige Dichtmembrane 11 mit einer umlaufenden Dehnfalte 12 eingesetzt und weist zumindest unterhalb der Dichtmembrane 11 einen quadratischen Querschnitt 13 auf, mit dem sie ein erstes Schaltglied 14 und ein zweites Schaltglied 15 eines zweiteiligen Schiebeschaltgliedes 16 durchragt. Endseitig trägt die Verstellachse 3 ein Drehschaltglied 17.

Das erste Schaltglied 14 und das zweite Schaltglied 15 sind auf senkrecht zueinander ausgerichteten Translationsachsen 18, 19 relativ zueinander kreuzweise verschiebbar in dem Gehäuse 2 gelagert. Hierzu weist das Gehäuse 2 kreuzförmig zueinander angeformte Führungsstege 20 auf, die im Wesentlichen V-förmig ausgebildet sind, wobei eine Spitze 21 jedes Führungssteges 20 in einen von den beiden übereinander angeordneten Schaltgliedern 14, 15 gebildeten Eckbereich weist. Die Schenkel 22 der Führungsstege 20 sind als Rastkurven 23 ausgebildet, die von den Schaltgliedern 14, 15 zugeordneten federbelasteten Rasthülsen 24 beaufschlagt sind.

Das erste Schaltglied 14 des Schiebschaltgliedes 16 ist aus seiner Ausgangsstellung entlang der ersten Translationsachse 18 bidirektional verschiebbar und weist eine Nut 25 zur drehfesten und entlang der zweiten Translationsachse 19 verschiebbaren Lagerung der Platte 10 auf. Auf der der Nut 25 gegenüberliegenden Seite des ersten Schaltgliedes 14 ist eine Freimachung 26 eingelassen, in die das zweite Schaltglied 15 verschiebbar eingesetzt ist. Im Weiteren weist das erste Schaltglied 14 in seiner Mitte ein Langloch 27 auf, das senkrecht zur ersten Translationsachse 18 ausgerichtet ist und mit einer mittig angeordneten bauchigen Öffnung 28 versehen ist. Darüber hinaus sind dem ersten Schaltglied 14 als Kontaktrollen 29 ausgebildete Schaltkontakte 30 zugeordnet, die im Bereich schmaler Endseiten 31 der rechteckförmigen Grundfläche des ersten Schaltgliedes 14 in Richtung eines Sockels 32 weisend befestigt sind.

Das zweite Schaltglied 15 des Schiebschaltgliedes 16 ist aus seiner Ausgangsstellung entlang der zweiten Translationsachse 19 bidirektional verschiebbar und mit einer in Richtung des Sockels 32 weisenden Aussparung 33 für das Drehschaltglied 17 versehen. Des Weiteren ist in das zweite Schaltglied 15 ein Langloch 34 mittig eingelassen, das senkrecht zur zweiten Translationsachse 19 ausgerichtet und ebenfalls mit einer mittig angeordneten bauchigen Öffnung 35 versehen ist. Ferner sind auch dem zweiten Schaltglied 15 als Kontaktrollen 29 ausgebildete Schaltkontakte 30 zugeordnet, die im Bereich schmaler Endseiten 31 der rechteckförmigen Grundfläche des zweiten Schaltgliedes 14 in Richtung des Sockels 32 weisend befestigt sind.

Das Drehschaltglied 17 ist mit kreuzförmig zueinander angeordneten Armen 36 versehen, die endseitig jeweils einen als Kontaktelement 37 ausgebildeten Schaltkontakt 30 aufweisen.

Die Schaltkontakte 30 der beiden Schaltglieder 14, 15 des Schiebeschaltgliedes 16 sowie die Schaltkontakte 30 des Drehschaltgliedes 17 beaufschlagen Anschlusskontakte 38 eines Stanzgitters 39, das zur Verbindung mit einem Bordnetz eines Kraftfahrzeuges in eine Kontakteinheit 40 mündet. Zwischen dem Sockel 32 und dem Gehäuse 2 ist eine umlaufende Dichtung 41 angeordnet.

Aufgrund der Anordnung der beiden Schaltglieder 14, 15 des Schiebeschaltgliedes 16 sowie der Ausrichtung der in die beiden Schaltglieder 14, 15 eingelassenen Langlöcher 27, 34 und der Lagerung der die Verstellachse 3 führenden Platte 10 ist eine gleichzeitige Verschiebung der beiden Schaltglieder 14, 15 verhindert. Im Weiteren ist aufgrund der Langlöcher 27, 34, der beiden Schaltglieder 14, 15 und dem quadratischen Querschnitt der Verstellsachse 3 eine Verdrehung des Betätigungselementes 1 in einer entlang einer der beiden Translationsachsen 18, 19 verschobenen Stellung verhindert. Die bauchigen Öffnungen 28, 35 geben einen die Verdrehung des Betätigungselementes 1 ermöglichenden, dem Eckmaß des quadratischen Querschnittes der Verstellachse 3 entsprechenden Durchmesser frei, wenn sich die beiden Schaltglieder 14, 15 in ihrer Ausgangslage befinden.

Beim Verschieben des Betätigungselementes 1 in eine der Richtungen der ersten Translationsachse 18 kommt die Verstellachse 3 an der entsprechenden Seitenwand des Langloches 27 des ersten Schaltgliedes 14 zur Anlage und nimmt dieses entgegen der Wirkung der sich an den der Bewegungsrichtung zugeordneten Führungsstege 20 federbelastet abstützenden Rasthülsen 24 mit. Die Endlage des ersten Schaltgliedes 14 ist durch die Länge des Langloches 34 des zweiten Schaltgliedes 15 vorgegeben. Während der Bewegung des Betätigungselementes 1 liegt die Dichtmembrane 11 aufgrund ihrer Dehnfalte 12 permanent an der in diesem Bereich zylindrischen Verstellachse 3 an. Beim Loslassen des Betätigungselementes 1 erfolgt eine selbsttätige Rückstellung in die Ausgangslage sowohl des Betätigungselementes 1 als auch des ersten Schaltgliedes 14 aufgrund der Wirkung der federbelasteten Rasthülsen 24. Beim Verschieben des Betätigungselementes 1 in eine der Richtungen der zweiten Translationsachse 19 kommt die Verstellachse 3 an der entsprechenden Seitenwand des Langloches 34 des zweiten Schaltgliedes 15 zur Anlage und nimmt dieses entgegen der Wirkung der sich an den der Bewegungsrichtung zugeordneten Führungsstege 20 federbelastet abstützenden Rasthülsen 24 mit. Gleichzeitig erfolgt eine Verschiebung der Platte 10 in der Nut 25 des ersten Schaltgliedes 14 in entsprechender Richtung. Die Rückstellung in die Ausgangslage beim Loslassen des Betätigungselementes 1 erfolgt wie zuvor erläutert.

Nach einer alternativen Ausgestaltung des Dreh-Schiebeschalters ist den beiden Schaltgliedern 14, 15 des Schiebeschaltgliedes 16 eine Betätigerplatte 42 mit einem Ausleger 43 zugeordnet, die oberhalb des ersten Schaltgliedes 14 gelagert ist. Die Betätigerplatte 42 weist ein parallel zu dem Langloch 27 des ersten Schaltgliedes 14 ausgerichtetes Langloch 44 zur Aufnahme der Verstellachse 3 des Betätigungselementes 1 sowie kreisbogenförmige Durchbrüche 45 für auf dem ersten Schaltglied 14 angeordnete Zapfen 46 auf. Des Weiteren sind in der Betätigerplatte 42 Mitnehmer 47 für die beiden Schaltglieder 14, 15 ausgeformt, wobei die Mitnehmer 47 für das erste Schaltglied 14 zum einen als eine stirnseitige Kante 48 der Betätigerplatte 42 und zum anderen als ein kreisbogenförmiges Langloch 49 und die Mitnehmer 47 für das zweite Schaltglied 15 als diametral gegenüberliegende Einbuchtungen 50 ausgebildet sind, die in Freimachungen 51 eingelassen sind. Die Mitnehmer 47 beaufschlagen zylindrische Aufnahmen 52 für druckfederbelastete Rasthülsen 53, die mit Rastkurven 54 an der dem Sockel 32 zugewandten Innenseite des Gehäuses 2 zusammenwirken, um die beiden Schaltglieder 14, 15 aus ihren jeweiligen Schaltstellungen in die Ausgangslage zu verschieben, wobei die Aufnahmen 52 mit den Schaltgliedern 14, 15 einstückig verbunden sind. Bei einer geradlinigen Verschiebung des Betätigungselementes 1 entlang einer der Translationsachsen 18, 19 wird das erste Schaltglied 14 oder das zweite Schaltglied 15 verlagert. Zur Führung weisen die Schaltglieder 14,15 in sockelseitigen Nuten 53 gleitende Führungsansätze 54 auf.

Bei einer Verdrehung des Betätigungselementes 1 erfolgt auch eine Drehung der Betätigerplatte 42 und der Ausleger 43 verschiebt ein zweites Schiebeschaltglied 55 innerhalb zugeordneter Führungsnuten 56 im Sockel 32, indem ein Zapfen 57 des Auslegers 43 in ein Langloch 58 des zweiten Schiebeschaltgliedes 55 eingreift, dem ebenfalls druckfederbelastete Rasthülsen zugeordnet sind, die mit entsprechenden gehäuseseitigen Rastkurven zusammenwirken und in Ansätzen 59 gehalten sind.

### Bezugszeichenliste

- 1.: Betätigungselement
- 2.: Gehäuse
- 3.: Verstellachse
- 4.: Wandung
- 5.: Rastkurve in 4
- 6.: Endanschläge von 5
- 7.: Rasthülsen von 8
- 8.: Ring
- 9.: Ansatz
- 10.: Platte
- 11.: Dichtmembrane
- 12.: Dehnfalte
- 13.: Querschnitt von 3
- 14.: erstes Schaltglied
- 15.: zweites Schaltglied
- 16.: Schiebeschaltglied
- 17.: Drehschaltglied
- 18.: Translationsachse
- 19.: Translationsachse
- 20.: Führungssteg
- 21.: Spitze von 20
- 22.: Schenkel von 20
- 23.: Rastkurve von 22
- 24.: Rasthülse von 14, 15
- 25.: Nut
- 26.: Freimachung
- 27.: Langloch von 14
- 28.: Öffnung von 14
- 29.: Kontaktrolle
- 30.: Schaltkontakt
- 31.: Endseite
- 32.: Sockel
- 33.: Aussparung
- 34.: Langloch von 15
- 35.: Öffnung von 15
- 36.: Arm von 17
- 37.: Kontaktelement von 17
- 38.: Anschlusskontakt
- 39.: Stanzgitter
- 40.: Kontakteinheit
- 41.: Dichtung
- 42.: Betätigerplatte
- 43.: Ausleger
- 44.: Langloch von 42
- 45.: Durchbruch
- 46.: Zapfen
- 47.: Mitnehmer
- 48.: Kante
- 49.: Langloch von 42
- 50.: Einbuchtung
- 51.: Freimachung
- 52.: Aufnahme
- 53.: Nut
- 54.: Führungsansatz
- 55.: zweites Schiebeschaltglied
- 56.: Führungsnut
- 57.: Zapfen
- 58.: Langloch von 55
- 59.: Ansatz von 55

## Patentansprüche

1. Dreh-Schiebeschalter, insbesondere für ein Kraftfahrzeug, mit einem drehbaren und auf senkrecht zueinander ausgerichteten Translationsachsen (18, 19) kreuzweise verschiebbaren Betätigungselement (1), das mit mindestens einem Schaltkontakte (30) tragenden Schiebeschaltglied (16) zur Beaufschlagung von Anschlusskontakten (38) zusammenwirkt, **dadurch gekennzeichnet, dass** das Schiebeschaltglied (16) zwei relativ zueinander verschiebbare, jeweils einer der Translationsachsen (18, 19) zugeordnete Schaltglieder (14, 15) aufweist.

2. Dreh-Schiebeschalter nach Anspruch 1, **dadurch gekennzeichnet, dass** die beiden Schaltglieder (14, 15) des Schiebeschaltgliedes (16) derart zueinander angeordnet sind, dass bei einer Verschiebung eines der Schaltglieder (14, 15) eine Beaufschlagung des jeweils anderen Schaltgliedes (14, 15) verhindert ist.

3. Dreh-Schiebeschalter nach Anspruch 1 oder 2, **dadurch gekennzeichnet, dass** die beiden Schaltglieder (14, 15) das Betätigungselement (1) derart lagern, dass bei einer Verschiebung eines der Schaltglieder (14, 15) eine Verdrehung des Betätigungselementes (1) verhindert ist.

4. Dreh-Schiebeschalter nach einem der Ansprüche 1 bis 3, **dadurch gekennzeichnet, dass** das erste der ersten Translationsachse (18) zugeordnete Schaltglied (14) eine in Richtung eines mit den Anschlusskontakten (38) versehenen Sockels (32) weisende Freimachung (26) zum Übergreifen des zweiten der zweiten Translationsachse (19) zugeordneten Schaltgliedes (15) aufweist.

5. Dreh-Schiebeschalter nach einem der Ansprüche 1 bis 4, **dadurch gekennzeichnet, dass** eine Grundfläche jedes der beiden Schaltglieder (14, 15) im Wesentlichen rechteckförmig ausgebildet ist.

6. Dreh-Schiebeschalter nach einem der Ansprüche 1 bis 5, **dadurch gekennzeichnet, dass** das erste und das zweite Schaltglied (14, 15) jeweils mit einem senkrecht zu ihrer Längsachse sowie senkrecht zu der zugeordneten Translationsachse (18, 19) ausgerichteten mittigen Langloch (27, 34) versehen sind, durch die eine Verstellachse (3) des Betätigungselementes (1) geführt ist.

7. Dreh-Schiebeschalter nach Anspruch 6, **dadurch gekennzeichnet, dass** die beiden Langlöcher (27, 34) jeweils in ihrer Mitte eine bauchige Öffnung (28, 35) aufweisen, wobei die in einer Ausgangsstellung des Betätigungselementes (1) übereinander stehenden Öffnungen (28, 35) einen lichten Durchmesser aufweisen, der einem Eckmaß der im Querschnitt quadratisch ausgebildeten Verstellachse (3) entspricht.

8. Dreh-Schiebeschalter nach einem der Ansprüche 4 bis 7, **dadurch gekennzeichnet, dass** das zweite Schaltglied (15) eine in Richtung des Sockels (32) weisende Aussparung (33) für ein Drehschaltglied (17) aufweist.

9. Dreh-Schiebeschalter nach einem der Ansprüche 6 bis 8, **dadurch gekennzeichnet, dass** in das erste Schaltglied (14) eine in Richtung des Betätigungselementes (1) weisende Nut (25) zur verschiebbaren Lagerung einer Platte (10) entlang der zweiten Translationsachse (19) des zweiten Schaltgliedes (15) eingelassen ist, die mit einer Durchgangsbohrung zur verdrehbaren Aufnahme der Verstellachse (3) versehen ist.

10. Dreh-Schiebeschalter nach einem der Ansprüche 1 bis 9, **dadurch gekennzeichnet, dass** das erste und das zweite Schaltglied (14, 15) zwischen kreuzförmig an einem Gehäuse (2) angeformten Führungsstegen (20) verschiebbar gelagert sind.

11. Dreh-Schiebeschalter nach Anspruch 10, **dadurch gekennzeichnet, dass** jeder der Führungsstege (20) im Wesentlichen V-förmig ausgebildet ist, wobei eine Spitze (21) jedes Führungssteges (20) in einen zwischen den beiden Schaltgliedern (14, 15) gebildeten Eckbereich weist.

12. Dreh-Schiebeschalter nach Anspruch 10, **dadurch gekennzeichnet, dass** jeder Schenkel (22) des Führungssteges (20) als Rastkurve (23) ausgebildet ist, die von einer zugeordneten federbelasteten Rasthülse (24) eines der Schaltglieder (14, 15) beaufschlagt ist.

13. Dreh-Schiebeschalter nach einem der Ansprüche 8 bis 12, **dadurch gekennzeichnet, dass** die Verstellachse (3) an ihrem freien Ende das Drehschaltglied (17) trägt.

14. Dreh-Schiebeschalter nach Anspruch 13, **dadurch gekennzeichnet, dass** das Drehschaltglied (17) mit kreuzförmig zueinander ausgerichteten Armen (36) mit endseitigen Kontaktelementen (37) zu Beaufschlagung zugeordneter Anschlusskontakte (38) versehen ist.

15. Dreh-Schiebeschalter nach einem der Ansprüche 10 bis 14, **dadurch gekennzeichnet, dass** der Verstellachse (3) eine zwischen dem Gehäuse (2) und dem Betätigungselement (1) angeordnete Rasteinrichtung für die Verdrehung des Betätigungselementes (1) zugeordnet ist.

16. Dreh-Schiebeschalter nach einem der Ansprüche 4 bis 6, **dadurch gekennzeichnet, dass** das erste und das zweite Schaltglied (14, 15) in jeweils einer in den Sockel (32) eingelassenen Nut (53) geführt sind, die entsprechend den Translationsachsen (18, 19) ausgerichtet sind.

17. Dreh-Schiebeschalter nach Anspruch 16, **dadurch gekennzeichnet, dass** das erste und das zweite Schaltglied (14, 15) jeweils endseitige Führungsansätze (54) aufweisen, mit denen sie in die zugeordneten Nuten (53) eingreifen.

18. Dreh-Schiebeschalter nach Anspruch 16 oder 17, **dadurch gekennzeichnet, dass** das erste und das zweite Schaltglied (14, 15) mit zylindrischen Aufnahmen (52) für druckfederbelastete Rasthülsen (24) versehen sind, die mit zugeordneten Rastbahnen des Gehäuses (2) zusammenwirken.

19. Dreh-Schiebeschalter nach einem der Ansprüche 16 bis 18, **dadurch gekennzeichnet, dass** dem ersten und dem zweiten Schaltglied (14, 15) eine gemeinsame Betätigerplatte (42) oberhalb des ersten Schaltgliedes (14) zur Beaufschlagung derselben zugeordnet ist.

20. Dreh-Schiebeschalter nach Anspruch 19, **dadurch gekennzeichnet, dass** die Betätigerplatte (42) mit einem Langloch (44) für die Verstellachse (3) versehen ist, das zu dem Langloch (27) des ersten Schaltgliedes (14) korrespondiert.

21. Dreh-Schiebeschalter nach Anspruch 19 oder 20, **dadurch gekennzeichnet, dass** in die Betätigerplatte (42) kreisbogenförmige Durchbrüche (45) eingelassen sind, in die zur Führung bei einer Verdrehung des Betätigungselementes (1) auf dem ersten Schaltglied (14) angeordnete Zapfen (46) eingreifen.

22. Dreh-Schiebeschalter nach einem der Ansprüche 19 bis 21, **dadurch gekennzeichnet, dass** die Betätigerplatte (42) Mitnehmer (47) für das erste und das zweite Schaltglied (14, 15) aufweist, die an den Aufnahmen (52) für die Rasthülsen (24) angreifen.

23. Dreh-Schiebeschalter nach einem der Ansprüche 19 bis 22, **dadurch gekennzeichnet, dass** die Betätigerplatte (42) einen Ausleger (43) aufweist, der zur Betätigung eines zweiten Schiebeschaltgliedes (55) bei einer Verdrehung des Betätigungselementes (1) dient, dessen Schaltkontakte zugeordnete Schaltkontaktbahnen beaufschlagen.

24. Dreh-Schiebeschalter nach Anspruch 23, **dadurch gekennzeichnet, dass** das zweite Schiebeschaltglied (55) einen im Querschnitt zylindrischen Ansatz umfasst, der zur translatorischen Verschiebung des zweiten Schiebeschaltgliedes (55) in einem Langloch des Auslegers (43) geführt ist, das korrespondierend zu dem Langloch (34) des zweiten Schaltgliedes (15) ausgerichtet ist.

25. Dreh-Schiebeschalter nach Anspruch 23, **dadurch gekennzeichnet, dass** das zweite Schiebeschaltglied (55) mit einem Langloch (58) versehen ist, in das ein am Ausleger (43) der Betätigerplatte (42) angeformter Zapfen (57) zur translatorischen Verschiebung des zweiten Schiebeschaltgliedes (55) eingreift.

26. Dreh-Schiebeschalter nach einem der Ansprüche 23 bis 25, **dadurch gekennzeichnet, dass** dem zweiten Schiebeschaltglied (55) druckfederbelastete Rasthülsen zugeordnet sind, die mit entsprechenden gehäuseseitigen Rastkurven zusammenwirken.

27. Dreh-Schiebeschalter nach einem der Ansprüche 23 bis 26, **dadurch gekennzeichnet, dass** das zweite Schiebeschaltglied (55) parallel zur Translationsachse (18) des ersten Schaltgliedes (14) verschiebbar in Nuten (56) im Sockel (32) geführt ist.

28. Dreh-Schiebeschalter nach einem der Ansprüche 23 bis 27, **dadurch gekennzeichnet, dass** das erste, das zweite Schaltglied (14, 15) und das zweite Schiebeschaltglied (55) an ihren schmalen Endseiten (31) mit jeweils einer in Richtung des Sockels (32) weisenden Kontaktrolle (29) versehen sind.

29. Dreh-Schiebeschalter nach einem der Ansprüche 10 bis 28, **dadurch gekennzeichnet, dass** die Verstellachse (3) eine in dem Gehäuse (2) angeordnete kreisringförmige Dichtmembrane (11) mit einer umlaufenden Dehnfalte (12) durchragt.

30. Dreh-Schiebeschalter nach einem der Ansprüche 4 bis 29, **dadurch gekennzeichnet, dass** zwischen dem Gehäuse (2) und dem Sockel (32) eine umlaufende Dichtung (41) angeordnet ist.

31. Dreh-Schiebeschalter nach einem der Ansprüche 23 bis 30, **dadurch gekennzeichnet, dass** das erste und das zweite Schaltglied (14, 15), das Drehschaltglied (17) sowie das zweite Schiebeschaltglied (55) zugeordnete Schaltstellungen getastet einnehmen.

32. Dreh-Schiebeschalter nach einem der Ansprüche 8 bis 31, **dadurch gekennzeichnet, dass** bei einer Beaufschlagung des ersten Schaltgliedes (14) Stellmotoren für eine Hinund Her-Bewegung eines Kraftfahrzeugsitzes, bei einer Betätigung des zweiten Schaltgliedes (15) Stellmotoren für eine Auf- und Ab-Bewegung des Kraftfahrzeugsitzes und bei einer Verdrehung des Drehschaltgliedes (17) oder einer Beaufschlagung des zweiten Schiebeschaltgliedes (55) Stellmotoren für eine Neigungsverstellung einer Rückenlehne des Kraftfahrzeugsitzes angesteuert werden.

## Claims

1. Rotary sliding switch, in particular for a motor vehicle, with a rotatable actuating element (1), displaceable crosswise on translational axes (18, 19) aligned perpendicular to one another, the actuating element cooperating with at least one sliding switch member (16) carrying switch contacts (30) for impacting connection contacts (38), **characterised in that** the sliding switch member (16) has two switch members (14, 15) displaceable relative to one another and associated in each case with one of the translational axes (18, 19).

2. Rotary sliding switch according to claim 1, **characterised in that** the two switch members (14, 15) of the sliding switch member (16) are arranged in respect of one another in such a way that when one of the switch members (14, 15) is displaced impacting of the other switch member (14, 15) in each case is prevented.

3. Rotary sliding switch according to claim 1 or 2, **characterised in that** the two switch members (14, 15) hold the actuating element (1) in such a way that when one of the switch members (14, 15) is displaced rotation of the actuating element (1) is prevented.

4. Rotary sliding switch according to one of claims 1 to 3, **characterised in that** the first switch member (14) associated with the first translational axis (18) has a clearance (26), pointing in the direction of a base (32) provided with the connection contacts (38), for overlapping the second switch member (15) associated with the second translational axis (19).

5. Rotary sliding switch according to one of claims 1 to 4, **characterised in that** a base face of each of the two switch members (14, 15) is constructed as substantially rectangular.

6. Rotary sliding switch according to one of claims 1 to 5, **characterised in that** the first and the second switch members (14, 15) are provided in each case with a central elongated hole (27, 34) aligned perpendicular to their longitudinal axis and perpendicular to the associated translational axis (18, 19), through which an adjustment pin (3) of the actuating element (1) is guided.

7. Rotary sliding switch according to claim 6, **characterised in that** the two elongated holes (27, 34) have a convex orifice (28, 35) in their centre in each case, wherein the orifices (28, 35) located above one another in an initial position of the actuating element (1) have a clear diameter corresponding to a corner measurement of the adjustment pin (3) constructed as square in cross-section.

8. Rotary sliding switch according to one of claims 4 to 7, **characterised in that** the second switch member (15) has a recess (33) pointing in the direction of the base (32) for a rotary switch member (17).

9. Rotary sliding switch according to one of claims 6 to 8, **characterised in that** let into the first switch member (14) is a groove (25) pointing in the direction of the actuating element (1) for displaceable holding of a plate (10) along the second translational axis (19) of the second switch member (15) provided with a through bore for rotatable accommodation of the adjustment pin (3).

10. Rotary sliding switch according to one of claims 1 to 9, **characterised in that** the first and the second switch members (14, 15) are held as displaceable between guide webs (20) moulded on to a housing (2) in a cross shape.

11. Rotary sliding switch according to claim 10, **characterised in that** each of the guide webs (20) is constructed as substantially V-shaped, a tip (21) of each guide web (20) pointing into a corner area formed between the two switch members (14, 15).

12. Rotary sliding switch according to claim 10, **characterised in that** each leg (22) of the guide web (20) is constructed as a latching curve (23) impacted by an associated spring-loaded latching socket (24) of one of the switch members (14, 15).

13. Rotary sliding switch according to one of claims 8 to 12, **characterised in that** the adjustment pin (3) carries the rotary switch member (17) on its free end.

14. Rotary sliding switch according to claim 13, **characterised in that** the rotary switch member (17) is provided with arms (36) aligned to one another in a cross shape with contact elements (37) on the ends for impacting associated connection contacts (38).

15. Rotary sliding switch according to one of claims 10 to 14, **characterised in that** associated with the adjustment pin (3) is a latching device, arranged between the housing (2) and the actuating element (1), for rotating the actuating element (1).

16. Rotary sliding switch according to one of claims 4 to 6, **characterised in that** the first and the second switch members (14, 15) are guided in a groove (53) in each case, let into the base (32) and aligned corresponding to the translational axes (18, 19).

17. Rotary sliding switch according to claim 16, **characterised in that** the first and the second switch members (14, 15) have in each case guide catches (54) on their ends with which they engage in the associated grooves (53).

18. Rotary sliding switch according to claim 16 or 17, **characterised in that** the first and the second switch members (14, 15) are provided with cylindrical retainers (52) for pressure-spring-loaded latching sockets (24) which cooperate with associated latching paths of the housing (2).

19. Rotary sliding switch according to one of claims 16 to 18, **characterised in that** associated with the first and the second switch members (14, 15) is a common actuator plate (42) above the first switch member (14) for impacting thereof.

20. Rotary sliding switch according to claim 19, **characterised in that** the actuator plate (42) is provided with an elongated hole (44) for the adjustment pin (3), corresponding to the elongated hole (27) of the first switch member (14).

21. Rotary sliding switch according to claim 19 or 20, **characterised in that** let into the actuator plate (42) are circular-arch-shaped openings (45) into which cogs (46), arranged on the first switch member (14) for guiding when the actuating element (1) rotates, engage.

22. Rotary sliding switch according to one of claims 19 to 21, **characterised in that** the actuator plate (42) has tappets (47) for the first and the second switch members (14, 15), which act on the retainers (52) for the latching sockets (24).

23. Rotary sliding switch according to one of claims 19 to 22, **characterised in that** the actuator plate (42) has an extension arm (43) which serves to actuate a second sliding switch member (55) when the actuating element (1) rotates, the switch contacts of which impact associated switch contact paths.

24. Rotary sliding switch according to claim 23, **characterised in that** the second sliding switch member (55) comprises a catch which is cylindrical in cross-section and guided in an elongated hole of the extension arm (43), aligned corresponding to the elongated hole (34) of the second switch member (15), for translatory displacement of the second sliding switch member (55).

25. Rotary sliding switch according to claim 23, **characterised in that** the second sliding switch member (55) is provided with an elongated hole (58) into which a cog (57) moulded on to the extension arm (43) of the actuator plate (42) engages for translatory displacement of the second sliding switch member (55).

26. Rotary sliding switch according to one of claims 23 to 25, **characterised in that** associated with the second sliding switch member (55) are pressure-spring-loaded latching sockets which cooperate with corresponding latching curves on the housing side.

27. Rotary sliding switch according to one of claims 23 to 26, **characterised in that** the second sliding switch member (55) is guided as displaceable parallel to the translational axis (18) of the first switch member (14) in grooves (56) in the base (32).

28. Rotary sliding switch according to one of claims 23 to 27, **characterised in that** the first and second switch members (14, 15) and the second sliding switch member (55) are provided on their narrow ends (31) with a contact roller (29) in each case, pointing in the direction of the base (32).

29. Rotary sliding switch according to one of claims 10 to 28, **characterised in that** the adjustment pin (3) projects through a circular-ring-shaped sealing membrane (11) with an encircling stretching fold (12) arranged in the housing (2).

30. Rotary sliding switch according to one of claims 4 to 29, **characterised in that** arranged between the housing (2) and the base (32) is an encircling seal (41).

31. Rotary sliding switch according to one of claims 23 to 30, **characterised in that** the first and the second switch members (14, 15), the rotary switch member (17) and the second sliding switch member (55) adopt associated switch positions when touched.

32. Rotary sliding switch according to one of claims 8 to 31, **characterised in that** when the first switch member (14) is impacted servomotors are triggered for a movement forwards and backwards of a motor vehicle seat, when the second switch member (15) is actuated servomotors are triggered for a movement up and down of the motor vehicle seat and when the rotary switch member (17) is rotated or the second sliding switch member (55) is impacted servomotors are triggered for an angle adjustment of a seatback of the motor vehicle seat.

## Revendications

1. Commutateur rotatif et coulissant, en particulier pour un véhicule, avec un élément d'actionnement (1) rotatif et coulissant de manière croisée sur des axes de translation (18, 19) perpendiculaires entre eux, lequel coopère avec au moins un organe de commutation coulissant (16) portant des contacts de commutation (30) afin de solliciter des contacts de connexion (38), **caractérisé en ce que** l'organe de commutation coulissant (16) possède deux organes de commutation (14, 15) pouvant coulisser l'un par rapport à l'autre et correspondant chacun à l'un des axes de translation (18, 19).

2. Commutateur rotatif et coulissant selon la revendication 1, **caractérisé en ce que** les deux organes de commutation (14, 15) de l'organe de commutation coulissant (16) sont disposés de telle manière que, en cas de coulissement de l'un des organes de commutation (14, 15), l'autre des deux organes de commutation (14, 15) ne peut pas être sollicité.

3. Commutateur rotatif et coulissant selon la revendication 1 ou 2, **caractérisé en ce que** les deux organes de commutation (14, 15) supportent l'élément d'actionnement (1) de telle sorte que, en cas de coulissement de l'un des organes de commutation (14, 15), la rotation de l'élément d'actionnement (1) est impossible.

4. Commutateur rotatif et coulissant selon l'une des revendications 1 à 3, **caractérisé en ce que** le premier organe de commutation (14), correspondant au premier axe de translation (18), possède une ouverture (26) dirigée dans la direction d'un socle (32) portant les contacts de connexion (38) afin d'enjamber le second organe de commutation (15), correspondant au second axe de translation (19).

5. Commutateur rotatif et coulissant selon l'une des revendications 1 à 4, **caractérisé en ce qu'**une surface de base de chacun des deux organes de commutation (14, 15) possède une forme sensiblement rectangulaire.

6. Commutateur rotatif et coulissant selon l'une des revendications 1 à 5, **caractérisé en ce que** le premier et le second organe de commutation (14, 15) sont pourvus chacun d'un trou oblong (27, 34) central, orienté perpendiculairement à leur axe longitudinal et perpendiculairement à l'axe de translation (18, 19) qui leur correspond, au travers desquels passe l'axe de commande (3) de l'élément d'actionnement (1).

7. Commutateur rotatif et coulissant selon la revendication 6, **caractérisé en ce que** les deux trous oblongs (27, 34) possèdent en leur centre une ouverture élargie (28, 35), les ouvertures (28, 35) étant superposées dans une position initiale de l'élément d'actionnement (1) et présentant un diamètre libre qui correspond à un côté de l'axe de commande (3) dont la section transversale est carrée.

8. Commutateur rotatif et coulissant selon l'une des revendications 4 à 7, **caractérisé en ce que** le second organe de commutation (15) possède un évidement (33) orienté dans la direction du socle (32) pour un organe de commutation rotatif (17).

9. Commutateur rotatif et coulissant selon l'une des revendications 6 à 8, **caractérisé en ce que** le premier organe de commutation (14) est pourvu d'une rainure (25) orientée dans la direction de l'élément d'actionnement (1) afin de recevoir une plaque (10) pouvant coulisser suivant le second axe de translation (19) du second organe de commutation (15) et pourvue d'un trou débouchant pour recevoir l'axe de commande (3) en lui permettant de pivoter.

10. Commutateur rotatif et coulissant selon l'une des revendications 1 à 9, **caractérisé en ce que** le premier et le second organe de commutation (14, 15) sont disposés de manière à pouvoir coulisser de manière croisée sur des nervures de guidage (20) surmoulées sur un boîtier (2).

11. Commutateur rotatif et coulissant selon la revendication 10, **caractérisé en ce que** chacune des nervures de guidage (20) a sensiblement la forme d'un V, une pointe (21) de chacune des nervures de guidage (20) étant dirigée vers un coin formé entre les deux organes de commutation (14, 15).

12. Commutateur rotatif et coulissant selon la revendication 10, **caractérisé en ce que** chaque branche (22) de la nervure de guidage (20) est conformée en courbe de crantage (23) qui est soumise à l'action d'une douille de crantage associée, sollicitée élastiquement (24) de l'un des organes de commutation (14, 15).

13. Commutateur rotatif et coulissant selon l'une des revendications 8 à 12, **caractérisé en ce que** l'axe de commande (3) porte à son extrémité libre l'organe de commutation rotatif (17).

14. Commutateur rotatif et coulissant selon la revendication 13, **caractérisé en ce que** l'organe de commutation rotatif est doté de bras (36) orientés de manière croisée entre eux, avec des éléments de contact d'extrémité (37) pour la sollicitation de contacts de connexion correspondants (38).

15. Commutateur rotatif et coulissant selon l'une des revendications 10 à 14, **caractérisé en ce que** l'axe de commande (3) est associé à un dispositif de crantage disposé entre le boîtier (2) et l'élément d'actionnement (1) et destiné à la rotation de l'élément d'actionnement (1).

16. Commutateur rotatif et coulissant selon l'une des revendications 4 à 6, **caractérisé en ce que** le premier et le second organe de commutation (14, 15) sont guidés chacun dans une rainure (53) ménagée dans le socle (32), ces rainures étant orientées suivant les axes de translation (18, 19).

17. Commutateur rotatif et coulissant selon la revendication 16, **caractérisé en ce que** le premier et le second organe de commutation (14, 15) possèdent chacun un téton de guidage d'extrémité (54), grâce auxquels ils s'engagent dans les rainures (53) correspondantes.

18. Commutateur rotatif et coulissant selon la revendication 16 ou 17, **caractérisé en ce que** le premier et le second organe de commutation (14, 15) sont pourvus de logements cylindriques (52) pour des douilles de crantage sollicitées élastiquement en pression (24) qui coopèrent avec des pistes de crantage correspondantes du boîtier (2).

19. Commutateur rotatif et coulissant selon l'une des revendications 16 à 18, **caractérisé en ce que** le premier et le second organe de commutation (14, 15) sont associés à une plaque d'actionnement commune (42) disposée au-dessus du premier organe de commutation (14) afin de solliciter ce dernier.

20. Commutateur rotatif et coulissant selon la revendication 19, **caractérisé en ce que** la plaque d'actionnement (42) est pourvue d'un trou oblong (44) destiné à l'axe de commande (3) et correspondant au trou oblong (27) du premier organe de commutation (15).

21. Commutateur rotatif et coulissant selon la revendication 19 ou 20, **caractérisé en ce que** la plaque d'actionnement (42) présente des traversées en arc de cercle (45) dans lesquelles s'engagent des tourillons (46) disposés sur le premier organe de commutation (14) pour assurer une fonction de guidage en cas de rotation de l'élément d'actionnement (1).

22. Commutateur rotatif et coulissant selon l'une des revendications 19 à 21, **caractérisé en ce que** la plaque d'actionnement (42) possède, pour le premier et le second organe de commutation (14, 15), des éléments d'entraînement (47) qui s'engagent dans les logements (52) des douilles de crantage (24).

23. Commutateur rotatif et coulissant selon l'une des revendications 19 à 22, **caractérisé en ce que** la plaque d'actionnement (42) possède un bras (43) servant, lors d'une rotation de l'élément d'actionnement (1), à actionner un second organe de commutation coulissant (55) dont les contacts de commutation sollicitent des pistes de contact de commutation correspondantes.

24. Commutateur rotatif et coulissant selon la revendication 23, **caractérisé en ce que** le second organe de commutation coulissant (55) possède un appendice de section cylindrique qui, pour réaliser le coulissement en translation du second organe de commutation coulissant (55), est guidé dans un trou oblong du bras (43) qui est orienté de la même manière que le trou oblong (34) du second organe de commutation (15).

25. Commutateur rotatif et coulissant selon la revendication 23, **caractérisé en ce que** le second organe de commutation coulissant (55) est pourvu d'un trou oblong (58) dans lequel s'engage un tourillon (57) surmoulé sur le bras (43) de la plaque d'actionnement (42) pour réaliser le coulissement en translation du second organe de commutation coulissant (55).

26. Commutateur rotatif et coulissant selon l'une des revendications 23 à 25, **caractérisé en ce que** le second organe de commutation coulissant (55) est associé à des douilles de crantage sollicitées élastiquement en pression qui coopèrent avec des courbes de crantage correspondantes sur le boîtier.

27. Commutateur rotatif et coulissant selon l'une des revendications 23 à 26, **caractérisé en ce que** le second organe de commutation coulissant (55) est guidé parallèlement à l'axe de translation du premier organe de commutation (14) en coulissant dans des rainures (56) ménagées dans le socle (32).

28. Commutateur rotatif et coulissant selon l'une des revendications 23 à 27, **caractérisé en ce que** le premier et le second organe de commutation (14, 15) et le second organe de commutation coulissant (55) sont dotés chacun, sur leur petit côté (31), d'un galet de contact (29) orienté dans la direction du socle (32).

29. Commutateur rotatif et coulissant selon l'une des revendications 10 à 28, **caractérisé en ce que** l'axe de commande (3) traverse une membrane d'étanchéité circulaire (11) disposée dans le boîtier (2) et possédant un pli d'extension périphérique (12).

30. Commutateur rotatif et coulissant selon l'une des revendications 4 à 29, **caractérisé en ce qu'**un joint continu (41) est disposé entre le boîtier (2) et le socle (32).

31. Commutateur rotatif et coulissant selon l'une des revendications 23 à 30, **caractérisé en ce que**, à chaque actionnement, le premier et le second organe de commutation (14, 15), l'organe de commutation rotatif (17) et le second organe de commutation coulissant (55) adoptent des positions de commutation associées.

32. Commutateur rotatif et coulissant selon l'une des revendications 8 à 31, **caractérisé en ce qu'**une sollicitation du premier organe de commutation (14) commande des servomoteurs de déplacement avant-arrière d'un siège de véhicule, qu'un actionnement du second organe de commutation (15) commande des servomoteurs de montée et de descente du siège de véhicule et qu'une rotation de l'organe de commutation rotatif (17) ou une sollicitation du second organe de commutation coulissant (55) commandent des servomoteurs pour le réglage de l'inclinaison du dossier du siège de véhicule.
